Europäisches Patentamt

European Patent Office

Office européen des brevets

(11) Veröffentlichungsnummer: **0 171 719 B1**

# EUROPÄISCHE PATENTSCHRIFT

(45) Veröffentlichungstag der Patentschrift: **18.09.91**

(51) Int. Cl.⁵: **A01C 5/06, A01B 63/32**

(21) Anmeldenummer: **85109722.0**

(22) Anmeldetag: **02.08.85**

(54) Drillmaschine.

(30) Priorität: 16.08.84 DE 3430136

(43) Veröffentlichungstag der Anmeldung:
19.02.86 Patentblatt 86/08

(45) Bekanntmachung des Hinweises auf die
Patenterteilung:
18.09.91 Patentblatt 91/38

(84) Benannte Vertragsstaaten:
AT BE CH DE FR GB IT LI LU NL SE

(56) Entgegenhaltungen:
DE-A- 1 457 742     DE-A- 2 731 117
DE-B- 1 067 252     DE-C- 3 126 473
FR-A- 2 530 113     US-A- 3 749 035

LANDTECHNIK 5, Mitte Mai 1975, Seiten
236,237, KTBL-Darmstadt, DE; M. EIMER:
"Neue Regelungseinrichtungen für die Landwirtschaft"

(73) Patentinhaber: **Amazonen-Werke H. Dreyer
GmbH & Co. KG
Postfach 51
W-4507 Hasbergen-Gaste(DE)**

(72) Erfinder: **Gattermann, Bernd
Eichenweg 3
W-2872 Hude i.O.(DE)**
Erfinder: **Gehrke, Rudolf
Lärchenweg 6
W-2990 Papenburg 2(DE)**

(74) Vertreter: **Patentanwälte Grünecker, Kinkeldey, Stockmair & Partner
Maximilianstrasse 58
W-8000 München 22(DE)**

## Beschreibung

Die Erfindung betrifft eine Drillmaschine gemäß dem Oberbegriff des Anspruchs 1.

Eine Drillmaschine dieser Art ist aus der DE-OS 32 26 659 bekannt. Bei dieser Drillmaschine ist neben einem Säschar ein auf der Bodenoberfläche abrollendes Meßrad angeordnet. Das Säschar und das Meßrad sind jeweils über Haltearme in aufrechter Ebene schwenkbar mit Hilfe von Gelenken an dem Rahmen der Drillmaschine angeordnet. Zwischen dem Haltearm des Säschares und dem Haltearm des Meßrades ist eine aus Schaltern bestehende Meßeinrichtung angeordnet, die Impulse an eine Steuereinrichtung übermittelt. Aufgrund dieser Impulse steuert die Steuereinrichtung die zentrale Einstellvorrichtung für die Einstellung der Spannung der Schardruckfeder. Durch Verändern des Schardruckes, der von den Schardruckfedern bestimmt wird, läßt sich der Tiefgang der Säschare steuern.

Nachteilig ist bei dieser bekannten Meßeinrichtung zunächst, daß das auf dem Boden abrollende Meßrad sehr leicht ins Schwingen gerät und somit die Meßeinrichtung sehr ungenaue, fehlerhafte und falsche Impulse an die Steuereinrichtung übermittelt. Weiterhin können sich die Schwingungen von Meßrad und Säschar überlagern, wenn das Säschar ebenfalls etwas ins Schwingen gerät.

Schließlich kommt es beim Einsatz der Drillmaschine auf feuchten und nassen Böden vor, daß sich eine fortwährend dicker werdende Erdschicht auf der Lauffläche des Meßrades ansetzt, so daß der tatsächliche Durchmesser des Meßrades ständig größer wird. Hierdurch wird ein zu großer Tiefgang (Eindringtiefe des Säschars in den Boden) des Säschares vorgetäuscht.

Aus der DE-OS 27 31 117 ist es bereits bekannt, bei einer landwirtschaftlichen Maschine mit Hilfe eines Reflexionslichtschrankenhalters eine Tiefensteuerung durchzuführen. Der berührungslose Sensor ist dabei am Rahmen der Maschine angeordnet und ist schräg geneigt auf den Boden gerichtet. Der gesamte Rahmen der dort beschriebenen Bodenbearbeitungsmaschine ist um einen Schwenkpunkt verschwenkbar, so daß auch der Sensor beim Anheben oder Absenken auf einer Kreisbahn verschwenkt wird. Diese unterschiedlichen Winkelstellungen des Sensors bezüglich der Bodenoberfläche führt jedoch zu Fehlmessungen, so daß eine derartige Messung insbesondere bei Drillmaschinen, bei denen eine sehr genaue Tiefensteuerung erforderlich ist, nicht anwendbar ist. Diese bekannte Vorrichtung macht somit keinen Gebrauch vom Vorteil der an sich höheren Meßgenauigkeit der berührungslosen Sensoren.

Der Erfindung liegt die Aufgabe zugrunde, eine Drillmaschine anzugeben, bei der die Eindringtiefe der Säschare in den Boden genauer als bisher gemessen werden kann.

Diese Aufgabe wird bei einer gattungsgemäßen Drillmaschine mit den kennzeichnenden Merkmalen des Anspruchs 1 gelöst. Infolge dieser Maßnahmen wird eine von der Bodenfeuchtigkeit unabhängige und gleichzeitig vereinfachte Meßeinrichtung geschaffen.

Auch ist es einfach möglich, die Meßeinrichtung nachträglich ohne zusätzliche Bauteile direkt fest an einem Säschar bzw. dessen Haltearm anzuordnen, da der Mikroprozessor die durch die Winkeländerung des Säschars beim Auf- und Abbewegen des Säschars hervorgerufene Neigung und die daraus resultierenden Änderungen der Meßwerte des Sensors berücksichtigen kann.

Vorzugsweise ist der Sensor als ein Ultraschallsensor ausgebildet. Hierdurch wird eine sehr robuste und verschmutzungsunanfällige Meßeinrichtung geschaffen. Sollte sich Staub oder Schmutz an dem Ultraschallsensor ansetzen, so fällt dieser Schmutz aufgrund der Schwingungen des Sensors ab. Es ist jedoch auch möglich, den Sensor als Infrarotsender auszubilden, wenn für dessen Sauberhaltung gesorgt wird.

Weitere Einzelheiten der Erfindung sind den übrigen Unteransprüchen, der Beispielsbeschreibung und den Zeichnungen zu entnehmen. Hierbei zeigt

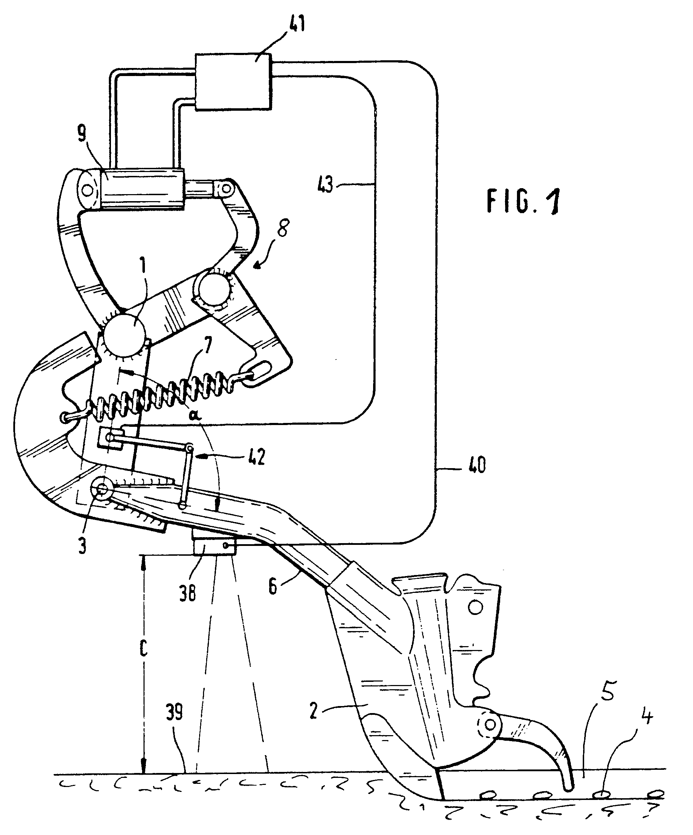

Fig. 1 ein Säschar mit einem direkt an den Haltearmen der Säschare angeordneten Sensor in der Seitenansicht.

An dem Rahmen 1 der Drillmaschine sind die Säschare 2, von denen nur eines dargestellt ist, jeweils mit Hilfe des Gelenkes 3 in aufrechter Ebene höhenverschwenkbar angeordnet. Den Säscharen 3 werden in bekannter und daher nicht dargestellter Weise die auszubringenden Saatkörner 4 in einstellbaren Mengen über Dosierorgane zugeführt. Die Saatkörner 4 werden jeweils zu der von den Säscharen 2 erzeugten Säfurchen 5 abgelegt. Zwischen den Haltearmen 6 und den Säscharen 2 und dem Rahmen 1 der Drillmaschine sind jeweils die Schardruckfedern 7 angeordnet, deren Spannung über die zentrale Einstellvorrichtung 8 mit Hilfe des Hydraulikzylinders 9 zu verändern ist.

An dem Haltearm 6 des Säschares 2 ist der Ultraschallsensor 38 fest angeschraubt. Der Ultraschallsensor 38 weist eine Auswertschaltung auf, mit der der Abstand C des Ultraschallsensors 38 zur Bodenfläche 39 bestimmt wird. Der Ultraschallsensor 38 ist über das Kabel 40 mit dem in dem Schaltkasten 41 angeordneten Mikoprozessor verbunden. Zwischen dem Rahmen 1 und dem Haltearm 6 des Säschares ist eine Meßvorrichtung 42 für die Messung des Winkels α zwischen dem Rahmen 1 und dem Haltearm 6 des Säschares 2 angeordnet.

Die Meßeinrichtung 42 ist über das Kabel 43 mit dem in dem Schaltkasten 41 angeordneten Mikroprozessor verbunden. Die Meßvorrichtung 42 übermittelt den jeweiligen Winkel α an den Mikroprozessor. Über den Mikroprozessor wird die durch die Änderung des Scharwinkels α hervorgerufene Neigung des Ultraschallsensors 38 und die daraus resultierenden Meßabweichungen von dem senkrechten Abstand C zwischen dem Ultraschallsensor 38 und der Bodenoberfläche 39 kompensiert.

Über die Steuereinrichtung, die in dem Schaltkasten 41 angeordnet ist und Impulse von dem Mikroprozessor erhält, wird der Hydraulikzylinder 9 gesteuert und somit die Spannung der Schardruckfeder verändert. Hierdurch ist es möglich, den gewünschten Tiefgang der Säschare 2 konstant zu halten.

## Patentansprüche

1. Drillmaschine mit einem Rahmen (1) und daran über höhenverschwenkbare Haltearme (6) angeordnete Säschare (2), und mit einer Meßeinrichtung (10) zum Erfassen der Eindringtiefe der Säschare (2) in den Boden, **dadurch gekennzeichnet,** daß die Meßeinrichtung (10) zumindest einen berührungslosen Sensor (38) aufweist, der am Haltearm (6) eines Säschares angeordnet ist, daß eine Meßvorrichtung (42) zur Erfassung der Stellung des Haltearms (6) vorhanden ist und daß der Sensor (38) und die Meßvorrichtung (42) mit einen Mikroprozessor zum Kompensieren der durch die Änderung des Winkels (α) Kompensieren der durch die Änderung des Winkels (α) zwischen Haltearm (6) und Rahmen (1) hervorgerufenen Neigung des Sensors (38) verbunden sind.

2. Drillmaschine nach Anspruch 1, **dadurch gekennzeichnet,** daß der Sensor (38) außerhalb des Arbeitsbereiches des Säschares (2) angeordnet ist.

3. Drillmaschine nach Anspruch 1 oder 2, **dadurch gekennzeichnet**, daß der Sensor (38) vor dem Säschar (2) und/oder seitlich des Säschares (2) angeordnet ist.

4. Drillmschine nach wenigstens einem der Ansprüche 1 - 3, **dadurch gekennzeichnet**, daß der Sensor (38) ein Ultraschallsensor oder ein Infrarotsensor ist.

## Claims

1. A seed drill with a frame (1) and sowing coulters (2) mounted thereon by means of vertically-pivotable retainer arms (6), and with a measuring device (10) for determining the depth of penetration of the sowing coulters (2) into the soil, characterised in that the measuring device (10) has at least one non-contact sensor (38) located on the retainer arm (6) of a sowing coulter, that a measuring device (42) is present for determining the position of the retainer arm (6), and that the sensor (38) and the measuring device (42) are connected to a microprocessor in order to compensate for the inclination of the sensor (38) caused by the alteration in the angle ( ) between the retainer arm (6) and the frame (1).

2. A seed drill according to Claim 1, characterised in that the sensor (38) is located outwith the area of operation of the sowing coulter (2).

3. A seed drill according to Claim 1 or 2, characterised in that the sensor (38) is located in front of the sowing coulter (2) and/or to one side of the sowing coulter (2).

4. A seed drill according to at least one of Claims 1 to 3, characterised in that the sensor (38) is an ultrasonic sensor or an infrared sensor.

## Revendications

1. Semoir comportant un châssis (1) portant des socs de semoir (2) montés sur le châssis de manière pivotante en hauteur par l'intermédiaire de bras de fixation (6) et une installation de mesure (10) pour détecter la profondeur de pénétration des socs de semoir (2) dans le sol, semoir caractérisé en ce que l'installation de mesure (10) comporte au moins un capteur sans contact (38) qui est prévu sur un bras de fixation (6) d'un soc de semoir, un dispositif de mesure (42) pour détecter la position du bras de fixation (6) et le capteur (38) et le dispositif de mesure (42) sont reliés à un microprocesseur pour compenser l'inclinaison du capteur (38) engendrée par la variation de l'angle (α) entre le bras de fixation (6) et le châssis (1).

2. Semoir selon la revendication 1, caractérisé en ce que le capteur (38) est prévu à l'extérieur de la zone de travail du soc de semoir (2).

3. Semoir selon la revendication 1 ou 2, caractérisé en ce que le capteur (38) est prévu en amont du soc de semoir (2) et/ou à côté du soc de semoir (2).

4. Semoir au moins l'une des revendications 1 à 3, caractérisé en ce que le capteur (38) est un capteur à ultra-sons ou un capteur à lumière infrarouge.

FIG. 1